(19) Europäisches Patentamt / European Patent Office / Office européen des brevets

(11) **EP 3 398 451 B1**

(12) **EUROPEAN PATENT SPECIFICATION**

(45) Date of publication and mention
of the grant of the patent:
**28.07.2021 Bulletin 2021/30**

(21) Application number: **16881635.3**

(22) Date of filing: **14.12.2016**

(51) Int Cl.:
**A23L 27/12** (2016.01)        **A23L 2/02** (2006.01)
**A23L 19/00** (2016.01)        **A23L 2/06** (2006.01)

(86) International application number:
**PCT/JP2016/087236**

(87) International publication number:
**WO 2017/115656 (06.07.2017 Gazette 2017/27)**

(54) **LEMON JUICE AND FOOD OR DRINK CONTAINING LEMON JUICE**

ZITRONENSAFT UND NAHRUNGSMITTEL ODER GETRÄNK MIT ZITRONENSAFT

JUS DE CITRON, ET ALIMENT OU BOISSON CONTENANT DU JUS DE CITRON

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.12.2015 JP 2015256143**

(43) Date of publication of application:
**07.11.2018 Bulletin 2018/45**

(73) Proprietor: **POKKA SAPPORO FOOD & BEVERAGE LTD.**
**Nagoya-shi, Aichi 460-0008 (JP)**

(72) Inventors:
• **TSUCHIMOTO Norihiko**
**Tokyo 150-8522 (JP)**
• **YAMAGUCHI Kenji**
**Kitanagoya-shi**
**Aichi 481-8515 (JP)**

(74) Representative: **Hoffmann Eitle**
**Patent- und Rechtsanwälte PartmbB**
**Arabellastraße 30**
**81925 München (DE)**

(56) References cited:
**WO-A1-2015/146880        JP-A- 2002 300 866**
**JP-A- 2002 300 866        JP-A- 2010 273 658**
**JP-A- 2012 060 947        US-A1- 2004 208 966**
**US-A1- 2004 208 966        US-A1- 2004 228 956**
**US-A1- 2010 151 088        US-A1- 2012 088 015**
**US-A1- 2012 088 015**

**Description**

BACKGROUND OF THE INVENTION

Field of the Invention

The present invention relates to a lemon juice and to a food or beverage containing the lemon juice.

Related Background Art

In recent years, beverages containing pulp components from fruits or vegetables have been provided from the viewpoint of palatability, to impart a characteristic feel in the mouth when drinking. For example, PTL 1 discloses a beverage containing fine orange pulp.

Furthermore, PTL 2 is concerned with a ground material of a whole citrus fruit. The ground material has a proportion of at least 50 wt.% of the fraction having a particle size of 75 to 250 $\mu$m. According to an example, a ground lemon material is produced by washing, peeling and subsequently grinding lemons.

PTL 3 inter alia relates to the production of ground pomace, i.e. the strained residue from making juice. The ground pomace may be ground to 250 $\mu$m or less.

In PTL 4, a low pulp beverage is described which is made by passing a feed juice through a filter aid to form a retentate and a filtrate. The filtrate has from between 0.01% to 2% solids by volume. Substantial portions of the solids are particles sized from between 30 to about 200 microns.

[Citation List]

[Patent literature]

[PTL 1] International Patent Publication No. WO2005/067740
[PTL 2] JP 2002-300866 A
[PTL 3] US 2012/088015 A1
[PTL 4] US 2004/208966 A1

SUMMARY OF THE INVENTION

Conventional lemon juices containing lemon pulp, however, form hard sedimentation on the bottom of the container, and the sedimentation once formed has been difficult to redisperse.

Moreover, it is known that in most cases, a fruit juice or food or beverage containing fruit juice undergoes progressive browning during production (especially during heat treatment), during transport, and during storage. Lemon juice and lemon juice-containing foods or beverages are usually stored for long periods, and yet lemon juice undergoes progressive browning more rapidly than other fruit juices, while its original colorless, pale yellow or opalescent nature also makes its browning more noticeable. Lemon juice and lemon juice-containing foods and beverages have therefore had poor outer appearance, and this has significantly reduced the commercial value.

The present invention has been accomplished in light of these circumstances, and its object is to provide a lemon juice with a satisfactory outer appearance, which is resistant to formation of sedimentation of water-insoluble solids such as lemon pulp in the lemon juice as time progresses, and less noticeability of browning.

The present invention provides a lemon juice including water-insoluble solids, wherein the median diameter of the water-insoluble solids is between 25 $\mu$m and 180 $\mu$m, inclusive, and a mean particle diameter of the water-insoluble solids is between 21 $\mu$m and 140 $\mu$m, inclusive. The lemon juice is a straight or a concentrated and reconstituted 100% lemon juice, wherein 100% lemon juice means a lemon juice obtainable by crushing lemon fruit and preparing squeezed or strained juice, with removal of the peel and seeds, or a lemon juice obtainable by diluting a concentrated form of the lemon juice to restore it to the squeezed juice form. The lemon juice of the present invention, having a median diameter of water-insoluble solids in the range specified above, is resistant to formation of sedimentation of water-insoluble solids such as lemon pulp in the lemon juice as time progresses, and has less noticeability of browning, and the lemon juice therefore has a satisfactory outer appearance. This allows large amounts of water-insoluble solids to be added to the lemon juice, imparting a satisfactory richness and juiciness to the lemon juice.

From the viewpoint of more notably exhibiting the aforementioned effect of the present invention, the lemon juice has a mean particle diameter of between 21 $\mu$m and 140 $\mu$m, inclusive, for the water-insoluble solids. Similarly, the lemon juice preferably has a 10% diameter of between 3.6 $\mu$m and 300 $\mu$m, inclusive, for the water-insoluble solids.

Since the mean particle diameter of the water-insoluble solids is between 21 $\mu$m and 140 $\mu$m, inclusive, the lemon juice of the present invention is resistant to formation of sedimentation of water-insoluble solids such as lemon pulp in the lemon juice as time progresses, and has less noticeability of browning, and therefore the lemon juice has a satisfactory outer appearance. This allows large amounts of water-insoluble solids to be added to the lemon juice, imparting a satisfactory richness and juiciness to the lemon juice.

From the viewpoint of more notably exhibiting the aforementioned effect of the present invention, the lemon juice preferably has a median diameter of between 25 $\mu$m and 180 $\mu$m, inclusive, for the water-insoluble solids. The lemon juice also preferably has a 10% diameter of between 3.6 $\mu$m and 300 $\mu$m, inclusive, for the water-insoluble solids.

The present invention also provides a lemon juice-containing food or beverage including the lemon juice of the present invention. The lemon juice preferably has a 10% diameter of between 3.6 $\mu$m and 300 $\mu$m, inclusive, for the water-insoluble solids.

The present invention still further provides a method of increasing dispersibility of water-insoluble solids in a lemon juice which includes limiting the median diameter of the water-insoluble solids to between 25 $\mu$m and 180 $\mu$m, inclusive, wherein the mean particle diameter of the water-insoluble solids is between 21 $\mu$m and 140 $\mu$m, inclusive, and wherein the lemon juice is a straight or a concentrated and reconstituted 100% lemon juice, wherein 100% lemon juice means a lemon juice obtainable by crushing lemon fruit and preparing squeezed or strained juice, with removal of the peel and seeds, or a lemon juice obtainable by diluting a concentrated form of the lemon juice to restore it to the squeezed juice form.

According to the present invention, it is possible to provide a lemon juice that is resistant to formation of sedimentation of water-insoluble solids as time progresses, has low noticeability of browning, and has a satisfactory outer appearance, as well as a lemon juice-containing food or beverage that includes the lemon juice. According to the present invention it is also possible to provide a method of increasing the dispersibility of water-insoluble solids in a lemon juice.

BRIEF DESCRIPTION OF THE DRAWINGS

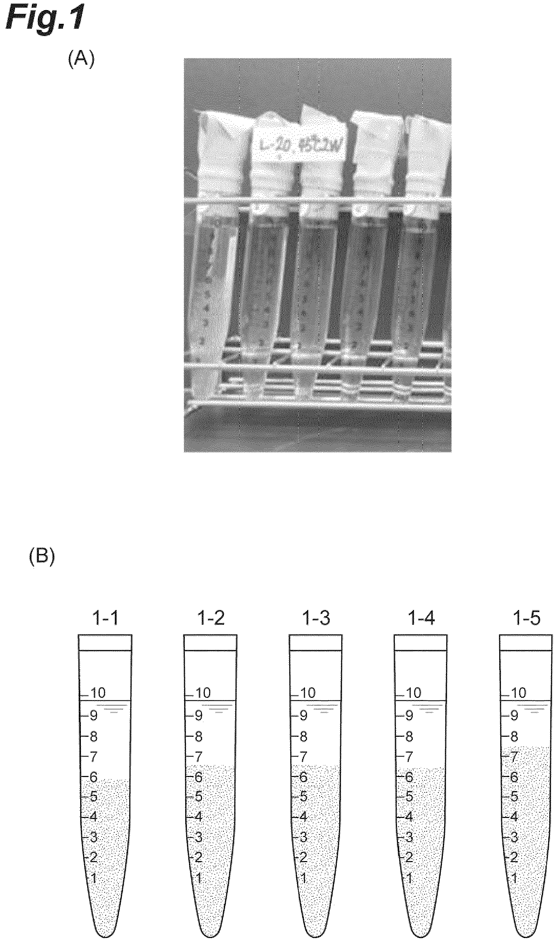

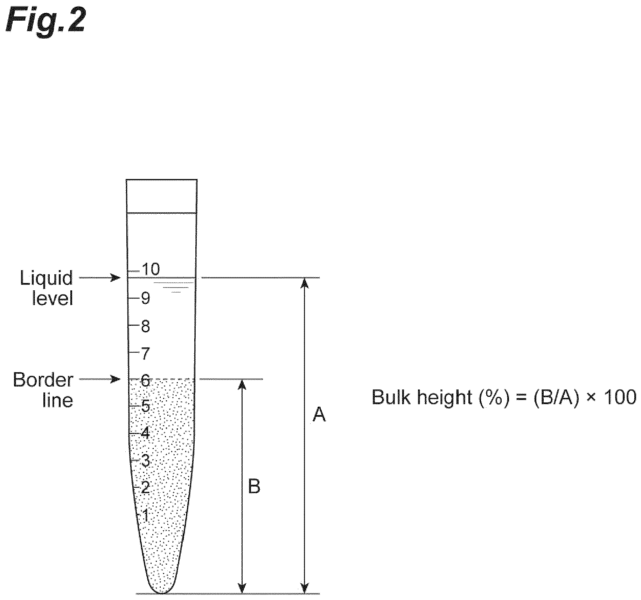

Fig. 1 is (A) a photograph of the outer appearance of the lemon juices of Test Nos. 1-1 to 1-5 in Test Example 1, after standing at 45°C for 2 weeks, and (B) a schematic diagram of the photograph of (A). Fig. 2 is a diagram showing the method of calculating the height of the water-insoluble solid bulk.

[Description of Embodiments]

[1. Lemon juice]

The lemon juice of this embodiment is lemon juice including water-insoluble solids, wherein the median diameter of the water-insoluble solids is between 25 $\mu$m and 180 $\mu$m, inclusive and the mean particle diameter of the water-insoluble solids is between 21 $\mu$m and 140 $\mu$m, inclusive.

A lemon juice is generally classified as a turbid fruit juice, a semi-clear fruit juice or a transparent fruit juice, depending on the amount of pulp present, each being associated with a concentrated fruit juice, a concentrated and reconstituted fruit juice, and a straight fruit juice, respectively.

In the present invention, the lemon juice used is a straight or a concentrated and reconstituted 100% lemon juice from the viewpoint of adequately exhibiting the effect of the present invention. The term "100% lemon juice" used here means juice obtained by crushing lemon fruit and preparing squeezed or strained juice, with removal of the peel, seeds, or one obtained by diluting a concentrated form of the same to restore it to the squeezed juice form, the acidity of the lemon juice being at least 4.5% and less than 9%.

The term "water-insoluble solids" as used herein means components that settle when lemon juice or a lemon juice-containing food or beverage has been centrifuged for 10 minutes at 3000 rpm at 20°C using a centrifugal separator with a radius of rotation of 14.5 cm, as described in "Current Juice/Fruit Beverage Handbook, Japan Fruit Juice Association, 1st edition, 1st printing, October 1, 1997), p.574", and for example, it includes lemon pulp from the pulp components, segments or segment membranes, or their crushed product, obtained after squeezing lemon fruit.

Throughout the present specification, "median diameter" means the particle diameter for which the cumulative amount of particles (% difference) is 50%, in the particle size distribution of lemon juice as measured with a laser diffraction particle size distribution analyzer (for example, SALD-2200 (Shimadzu Corp.)), and it is synonymous with the 50% diameter.

From the viewpoint of further increasing the effect of helping to prevent sedimentation of water-insoluble solids with the passage of time in the lemon juice, and obtaining a satisfactory outer appearance, the lower limit for the median diameter of the water-insoluble solids is, for example, preferably 30 $\mu$m or greater, more preferably 36 $\mu$m or greater,

even more preferably 40 μm or greater and most preferably 46 μm or greater. From the viewpoint of further increasing this effect, the upper limit for the median diameter of the water-insoluble solids is, for example, preferably no greater than 150 μm, more preferably no greater than 133 μm, even more preferably no greater than 70 μm and most preferably no greater than 62 μm.

In the lemon juice of the present invention, the mean particle diameter of the water-insoluble solids is between 21 μm and 140 μm, inclusive.

Throughout the present specification, "mean particle diameter" means particle diameter calculated by multiplying the relative particle amount (% difference) by the value of each particle diameter in the particle size distribution of lemon juice measured with a laser diffraction particle size distribution analyzer (for example, SALD-2200 (by Shimadzu Corp.)), and then dividing that by the total relative particle amount (100%), and specifically it is the particle diameter calculated by the following method.

First, the particle diameter range to be measured (maximum particle diameter: $x_1$, minimum particle diameter: $x_{n+1}$) is divided into n number of zones, with each particle diameter zone denoted as $[x_j, x_{j+1}]$ (j = 1, 2, ... n). The zoning in this case is into equal zones on a logarithmic scale. Also, the representative particle diameter in each particle diameter zone based on a logarithmic scale can be calculated by the following formula:

[Formula 1]

$$\text{Representative particle size} = \frac{\log_{10} x_j + \log_{10} x_{j+1}}{2}$$

Also, if $q_j$ (j = 1, 2, ... n) are represented by the relative particle amounts (% difference) for the corresponding particle diameter zones $[x_j, x_{j+1}]$, and the total for all of the zones is represented by 100%, then the average value μ on the logarithmic scale can be calculated by the following formula:

[Formula 2]

$$\mu = \frac{1}{100} \sum_{j=1}^{n} q_j \left( \frac{\log_{10} x_j + \log_{10} x_{j+1}}{2} \right)$$

The calculated value μ is a numerical value on the logarithmic scale, and therefore the mean particle diameter is calculated as $10^{\mu}$ (10 to the power of μ).

From the viewpoint of further increasing the effect of helping to prevent sedimentation of water-insoluble solids with the passage of time in the lemon juice, and obtaining a satisfactory outer appearance, the lower limit for the mean particle diameter of the water-insoluble solids is, for example, preferably 25 μm or greater, more preferably 28 μm or greater, even more preferably 33 μm or greater and most preferably 38 μm or greater. From the viewpoint of further increasing this effect, the upper limit for the mean particle diameter of the water-insoluble solids is, for example, preferably no greater than 130 μm, more preferably no greater than 121 μm, even more preferably no greater than 70 μm and most preferably no greater than 54 μm.

In the lemon juice of this embodiment, the 10% diameter of the water-insoluble solids may be between 3.6 μm and 300 μm, inclusive.

Throughout the present specification, "10% diameter" means the particle diameter for which the cumulative amount of particles (% difference) is 10%, in the particle size distribution of lemon juice as measured with a laser diffraction particle size distribution analyzer (for example, SALD-2200 (Shimadzu Corp.)).

The lemon juice may have a 10% diameter of the water-insoluble solids between 3.6 μm and 300 μm, inclusive. From the viewpoint of further increasing the effect of helping to prevent sedimentation of water-insoluble solids with the passage of time in the lemon juice, and obtaining a satisfactory outer appearance, the lower limit for the 10% diameter of the water-insoluble solids is, for example, preferably 3.7 μm or greater, more preferably 3.9 μm or greater, even more preferably 5.0 μm or greater and most preferably 8.0 μm or greater. From the viewpoint of further increasing this effect, the upper limit for the 10% diameter of the water-insoluble solids is, for example, preferably no greater than 50 μm, more preferably no greater than 39 μm, even more preferably no greater than 20 μm and most preferably no greater than 17 μm.

The content of water-insoluble solids in the lemon juice of this embodiment is not particularly restricted. From the viewpoint of further increasing the effect of preventing formation of sedimentation of water-insoluble solids in the lemon juice as time progresses, and reducing the noticeability of browning, and obtaining a satisfactory outer appearance, and the effect of imparting satisfactory richness and juiciness to the lemon juice, the lower limit for the content of water-insoluble solids is, for example, preferably 0.1% (vol/vol) or greater, and more preferably 1.0% (vol/vol) or greater, based on the total amount of lemon juice. Moreover, from the viewpoint of further increasing these effects, the upper limit for the content of water-insoluble solids is, for example, no greater than 50% (vol/vol), and more preferably no greater than 30% (vol/vol), based on the total amount of lemon juice. The content of water-insoluble solids may be calculated by the method described in paragraph [0020] above.

(Method for producing lemon juice)

The method for producing the lemon juice includes a step of adding water-insoluble solids adjusted to a median diameter in the range of between 25 $\mu$m and 180 $\mu$m, inclusive, and adjusted to a mean particle diameter in the range of between 21 $\mu$m and 140 $\mu$m, inclusive, to lemon juice. By including this step, the method for producing the lemon juice according to this embodiment can provide lemon juice that is resistant to formation of sedimentation of water-insoluble solids in the lemon juice as time progresses, and less noticeability of browning, and with a satisfactory outer appearance.

The method of adjusting the median diameter of the water-insoluble solids to the range of between 25 $\mu$m and 180 $\mu$m, inclusive may be either a method of physical treatment or chemical treatment, such as high-pressure homogenization or enzyme treatment.

When the median diameter of the water-insoluble solids is to be adjusted by high-pressure homogenization, an apparatus such as a high-pressure homogenizer may be used to homogenize the water-insoluble solids. The pressure for high-pressure homogenization is not particularly restricted. The high-pressure homogenization may be carried out either once or several times.

When the median diameter of the water-insoluble solids is to be adjusted by enzyme treatment, a plant tissue-disintegrating enzyme may be used for treatment at 35 to 55°C for 30 to 200 minutes. The plant tissue-disintegrating enzyme used for adjustment of the median diameter of the water-insoluble solids by enzyme treatment may be, for example, a cellulase, pectinase or hemicellulase.

In the method for producing the lemon juice, the water-insoluble solids may also be adjusted to a 10% diameter in the range of between 3.6 $\mu$m and 300 $\mu$m, inclusive, to a lemon juice. By including this step, the method for producing the lemon juice according to this embodiment can provide a lemon juice that is resistant to formation of sedimentation of water-insoluble solids in the lemon juice as time progresses, and that has a satisfactory outer appearance. The method of adjusting the mean particle diameter or 10% diameter to the prescribed range is the same method used for adjustment of the median diameter to the prescribed range.

The lemon juice of this embodiment may be produced, specifically, by squeezing lemon fruit and separating the lemon juice from the water-insoluble solids such as lemon pulp, subjecting the separated water-insoluble solids to high-pressure homogenization or enzyme treatment to adjust the median diameter and the mean particle diameter of the water-insoluble solids to the prescribed ranges, and then adding the water-insoluble solids to the lemon juice. The water-insoluble solids to be added to the lemon juice may be from the lemon fruit used to obtain the lemon juice, or it may be obtained from different lemon fruit. The obtained lemon juice may also be sterilized, concentrated, concentrated and reconstituted, and diluted, as necessary.

Instead of adding the water-insoluble solids to the lemon juice after adjusting the median diameter and the mean particle diameter of the water-insoluble solids to the prescribed ranges by high-pressure homogenization or enzyme treatment of the separated water-insoluble solids, the separated water-insoluble solids may be added to the lemon juice first, and then the water-insoluble solids in the lemon juice subjected to high-pressure homogenization or enzyme treatment for adjustment of the median diameter and the mean diameter of the water-insoluble solids to the prescribed ranges.

[2. Lemon juice-containing food or beverage]

The lemon juice-containing food or beverage of the present invention includes the lemon juice with a median diameter of between 25 $\mu$m and 180 $\mu$m, inclusive, and a mean particle diameter of between 21 $\mu$m and 140 $\mu$m, inclusive, for the water-insoluble solids. The lemon juice may have a 10% diameter of between 3.6 $\mu$m and 300 $\mu$m, inclusive, for the water-insoluble solids.

Lemon juice-containing foods and beverages include, for example, fruit drinks, soft drinks, carbonated beverages, alcoholic beverages (including carbonated alcoholic beverages) and seasonings (salted lemon), lemon vinegar, alcoholic beverage diluents and syrups.

The content of lemon juice in a lemon juice-containing food or beverage of this embodiment is not particularly restricted.

The lemon juice-containing food or beverage of this embodiment may also include fruit juice other than lemon juice. Fruit juices other than lemon juice are not particularly restricted and include citrus fruit juices such as orange juice and grapefruit juice. When a fruit juice other than lemon juice is to be included, the content of the fruit juice other than lemon juice is preferably no greater than 50 wt%, more preferably no greater than 30 wt%, even more preferably no greater than 10 wt% and most preferably no greater than 5 wt%, with respect to the total fruit juice. Here, "fruit juice" means fruit juice obtained by squeezing a fruit, and it may be concentrated, or diluted with drinking water.

The pH of the lemon juice-containing food or beverage of this embodiment is not particularly restricted so long as it is in a range suitable for a food or beverage. From the viewpoint of more thoroughly exhibiting the effect of imparting satisfactory richness and juiciness to lemon juice, the pH of the product is preferably no higher than 4.0, more preferably no higher than 3.6, and most preferably 2.0 to 3.4.

The lemon juice-containing food or beverage of this embodiment may also contain other components (additives) in ranges that do not interfere with the effect of the present invention. Examples of such other components that may be used include sweeteners, flavorings, acidulants, coloring agents, antioxidants, seasonings, fortifiers such as vitamins and minerals, pH adjusters, stabilizers, gelling agents, dietary fibers and indigestible dextrin. These components may be used alone or in combinations of two or more.

Sweeteners to be used include sugars such as sugar, sanonto, brown sugar, honey, reduced glycosylated starch, oligosaccharides, sugar alcohols and rare sugar, and high-sweetness sweeteners such as sucralose, aspartame, acesulfame potassium, saccharin, alitame and neotame. These sweeteners may be used alone or in combinations of two or more.

Flavorings to be used include both natural substances and synthetic substances. There are no particular restrictions on such flavorings, and examples include limonene, terpinene, citral, linalool, terpinolene and terpineol. These flavorings may be used alone or in combinations of two or more.

Acidulants to be used are not particularly restricted so long as they are ones used in foods or beverages. Examples of acidulants to be used include citric acid, ascorbic acid, lactic acid, malic acid, phosphoric acid, succinic acid, tartaric acid and acetic acid. From the viewpoint of taste compatibility with lemon juice, it is preferred to use citric acid. These acidulants may be used alone or in combinations of two or more.

Coloring agents to be used may be any natural coloring agents or synthetic coloring agents that are used for coloring of foods or beverages. Examples of coloring agents to be used include caramel pigment, gardenia pigment, marigold pigment, carotene pigment, anthocyanin pigment, fruit juice pigments, vegetable pigments and synthetic pigments. These pigments may be used alone or in combinations of two or more.

The lemon juice-containing food or beverage of this embodiment may be prepared as a packed food or beverage.

The container used for a packed food or beverage may be, for example, a glass bottle, resin-molded container, metal can, or a paper container combined with a metal foil or plastic film, similar to common foods or beverages. The type, form and color shade of the container is not particularly restricted.

Examples of resins to compose a resin-molded container include polyester resins such as polyethylene terephthalate and polybutylene terephthalate, and polyolefins such as polyethylene, polypropylene and polybutylene. The weight-average molecular weight and degree of crystallinity of such resins is not particularly restricted, and may be selected as appropriate for the conditions of distribution and storage of the food or beverage. A resin-molded container using polyethylene terephthalate is generally referred to as a "PET bottle". Classifications of PET bottles include aseptic PET bottles that are designed for ordinary temperature packing (aseptic packing) of foods or beverages, and heat-proof PET bottles designed for packing foods or beverages while performing heat sterilization or being sold as heated products, and any of these may be used for this embodiment.

Examples of metal cans include steel cans, aluminum cans and tin cans.

When the lemon juice-containing food or beverage of this embodiment is to be prepared as a packed food or beverage, it may be subjected to sterilization treatment as necessary. The sterilization and container packing for a packed food or beverage may be heat sterilization under conditions established by food hygiene law after packing of metal cans, for example. For products that cannot be subjected to retort sterilization, such as PET bottles or paper containers, the method may be one in which high temperature, short time sterilization using, for example, a plate type heat exchanger, under equivalent sterilization conditions to those described above, is followed by cooling to a prescribed temperature and packing in the container.

[3. Method of increasing dispersibility of water-insoluble solids in lemon juice]

The lemon juice of this embodiment exhibits an effect of helping to prevent formation of sedimentation of water-insoluble solids in the lemon juice as time progresses, and increasing the dispersibility of the water-insoluble solids. Thus, as an embodiment of the present invention there is provided a method of increasing the dispersibility of water-insoluble solids in a lemon juice which includes limiting the median diameter of the water-insoluble solids to between 25 $\mu$m and 180 $\mu$m, inclusive, and the mean particle diameter of the water-insoluble solids to between 21 $\mu$m and 140

μm, inclusive.

The method of increasing the dispersibility of water-insoluble solids in a lemon juice may include limiting the 10% diameter of the water-insoluble solids to between 3.6 μm and 300 μm, inclusive.

[Examples]

The present invention will now be explained in greater detail based on examples. However, the present invention is not limited to the examples described below.

[Test Example 1: Measurement of water-insoluble solid bulk in lemon juice (1)]

(Test No. 1-1)

Lemon pulp cells (commercial product) were added to transparent lemon juice (commercial product) to a water-insoluble solid content of 5% (vol/vol).

(Test Nos. 1-2 to 1-8)

After diluting lemon pulp cells (commercial product) 30-fold (weight/volume) with ion-exchanged water, the mixture was treated 1 to 30 times with a high-pressure homogenizer (HV-OA1-1.5S (product of Izumi Food Machinery Co., Ltd.)) in a range of 5 MPa to 23 MPa, to prepare samples with different particle diameters of the water-insoluble solids. The samples were added to transparent lemon juice (commercial product) to a water-insoluble solid content of 5% (vol/vol).

The obtained lemon juice (10 mL) was poured into a test tube scaled to 0.1 mL units, and the test tube was covered and subjected to heat sterilization at 90°C for 30 minutes. After evenly dispersing the lemon juice in the test tube with a vortex mixer, it was allowed to stand at 45°C for 2 weeks, and the height of the water-insoluble solid bulk was measured.

As shown in Fig. 2, the bulk height was calculated as the ratio of B to A (expressed as 0% to 100%), where (A) was the height from the bottom of the test tube to the liquid level, and (B) was the height from the bottom of the test tube to the border line between the supernatant portion and the portion in which the presence of insoluble solid components could be visually confirmed. That is, a higher bulk was associated with greater resistance to formation of sedimentation, and superior dispersibility.

Also, a laser diffraction particle size distribution analyzer (SALD-2200 (product of Shimadzu Corp.) was used to measure the median diameter, mean particle diameter and 10% diameter of the water-insoluble solids. The results are shown in Table 1. Fig. 1 shows photographs taken of the outer appearances of the lemon juices of Test Nos. 2-1 to 2-5, after standing at 45°C for 2 weeks, and schematic diagrams of the same.

[Table 1]

| Test No. | Pressure and number of treatments by high-pressure homogenization | Median diameter (μm) | Mean particle diameter (μm) | 10% diameter (μm) | Height of bulk after standing at 45°C for 2 weeks (%) |
|---|---|---|---|---|---|
| 1-1* | - | 661.4 | 622.1 | 383.8 | 59.0 |
| 1-2 | 5 MPa (1 time) | 132.8 | 121.0 | 38.1 | 65.0 |
| 1-3 | 10 MPa (1 time) | 131.3 | 118.6 | 37.9 | 65.0 |
| 1-4 | 20 MPa (1 time) | 114.0 | 106.1 | 36.0 | 64.0 |
| 1-5 | 20 MPa (3 times) | 61.3 | 53.4 | 16.5 | 74.0 |
| 1-6 | 23 MPa ( 10 times) | 46.3 | 38.8 | 8.2 | 75.0 |
| 1-7 | 23 MPa (20 times) | 36.3 | 28.8 | 3.9 | 62.5 |
| 1-8* | 23 MPa (30 times) | 24.3 | 20.7 | 3.5 | 50.0 |
| * Reference example, not according to the claimed invention. | | | | | |

With the lemon juices of Test No. 1-1 which included water-insoluble solids that had not been subjected to high-pressure homogenization, sedimentation of coarse pulp similar to fruit pulp was confirmed. However, with the lemon juices of Test Nos. 1-2 to 1-7 which included water-insoluble solids having particle diameters in a specified range, it was possible to confirm dispersion of soft pulp in the fruit juice, and a satisfactory outer appearance. With the lemon juice of Test No. 1-8 which had a reduced particle diameter for the water-insoluble solids, a reduction in dispersibility was confirmed.

[Test Example 2: Measurement of water-insoluble solid bulk in lemon juice (2)]

(Test No. 2-1)

A lemon juice-containing beverage including water-insoluble solids (trade name: Pruco Lemon Professional (product of Marie Brizard, Intl.), using concentrated and reconstituted 100% lemon juice) (10 mL) was poured into a test tube scaled to 0.1 mL units, and the test tube was covered and subjected to heat sterilization at 90°C for 30 minutes.
After evenly dispersing the lemon juice in the test tube with a vortex mixer, it was allowed to stand at 45°C for 2 weeks, and the height of the water-insoluble solid bulk was measured by the same method as in Test Example 1.
The median diameter, mean particle diameter and 10% diameter of the water-insoluble solids were also measured by the same method as in Test Example 1.
The results are shown in Table 2.

[Table 2]

| Test No. | Median diameter ($\mu$m) | Mean particle diameter ($\mu$m) | 10% diameter ($\mu$m) | Height of bulk after standing at 45°C for 2 weeks (%) |
|---|---|---|---|---|
| 2-1* | 188.3 | 144.1 | 30.7 | 20.0 |
| * Reference example, not according to the claimed invention. | | | | |

With the lemon juice of Test No. 2-1, the fruit juice was turbid overall, and fine sedimentation of pulp (bulk height: 20%) was confirmed.

**Claims**

1. A lemon juice including water-insoluble solids, wherein the median diameter of the water-insoluble solids is between 25 $\mu$m and 180 $\mu$m, inclusive,
   wherein the mean particle diameter of the water-insoluble solids is between 21 $\mu$m and 140 $\mu$m, inclusive, and
   wherein the lemon juice is a straight or a concentrated and reconstituted 100% lemon juice, wherein 100% lemon juice means a lemon juice obtainable by crushing lemon fruit and preparing squeezed or strained juice, with removal of the peel and seeds, or a lemon juice obtainable by diluting a concentrated form of the lemon juice to restore it to the squeezed juice form.

2. The lemon juice according to claim 1, wherein a 10% diameter of the water-insoluble solids is between 3.6 $\mu$m and 300 $\mu$m, inclusive.

3. A lemon juice-containing food or beverage including the lemon juice according to claim 1 or 2.

4. A method of increasing dispersibility of water-insoluble solids in a lemon juice, which includes limiting the median diameter of the water-insoluble solids to between 25 $\mu$m and 180 $\mu$m, inclusive,
   wherein the mean particle diameter of the water-insoluble solids is between 21 $\mu$m and 140 $\mu$m, inclusive, and
   wherein the lemon juice is a straight or a concentrated and reconstituted 100% lemon juice, wherein 100% lemon juice means a lemon juice obtainable by crushing lemon fruit and preparing squeezed or strained juice, with removal of the peel and seeds, or a lemon juice obtainable by diluting a concentrated form of the lemon juice to restore it to the squeezed juice form.

**Patentansprüche**

1. Zitronensaft, enthaltend wasserunlösliche Feststoffe, wobei der mediane Durchmesser der wasserunlöslichen Feststoffe zwischen 25 $\mu$m und 180 $\mu$m, einschließlich, liegt,

wobei der mittlere Partikeldurchmesser der wasserunlöslichen Feststoffe zwischen 21 μm und 140 μm, einschließlich, liegt, und

wobei der Zitronensaft ein direkter oder ein konzentrierter und rekonstituierter 100%iger Zitronensaft ist, wobei 100%iger Zitronensaft einen Zitronensaft, erhältlich durch Zerkleinern von Zitronenfrüchten und Herstellen eines gepressten oder gefilterten Safts unter Entfernung von Schale und Kernen, oder einen Zitronensaft, erhältlich durch Verdünnen einer konzentrierten Form des Zitronensafts, um diesem in die Form des gepressten Safts zurückzuführen, bedeutet.

2. Zitronensaft gemäß Anspruch 1, wobei ein 10%-Durchmesser der wasserunlöslichen Feststoffe zwischen 3,6 μm und 300 μm, einschließlich, liegt.

3. Zitronensaft-haltiges Lebensmittel oder Getränk, enthaltend den Zitronensaft gemäß Anspruch 1 oder 2.

4. Verfahren zur Erhöhung der Dispergierbarkeit von wasserunlöslichen Feststoffen in einem Zitronensaft, beinhaltend das Begrenzen des medianen Durchmessers der wasserunlöslichen Feststoffe auf zwischen 25 μm und 180 μm, einschließlich,

wobei der mittlere Partikeldurchmesser der wasserunlöslichen Feststoffe zwischen 21 μm und 140 μm, einschließlich, liegt, und

wobei der Zitronensaft ein direkter oder ein konzentrierter und rekonstituierter 100%iger Zitronensaft ist, wobei 100%iger Zitronensaft einen Zitronensaft, erhältlich durch Zerkleinern von Zitronenfrüchten und Herstellen eines gepressten oder gefilterten Safts unter Entfernung von Schale und Kernen, oder einen Zitronensaft, erhältlich durch Verdünnen einer konzentrierten Form des Zitronensafts, um diesem in die Form des gepressten Safts zurückzuführen, bedeutet.

**Revendications**

1. Jus de citron incluant des solides insolubles dans l'eau, dans lequel le diamètre médian des solides insolubles dans l'eau est entre 25 μm et 180 μm, inclus,

dans lequel le diamètre particulaire moyen des solides insolubles dans l'eau est entre 21 μm et 140 μm, inclus, et dans lequel le jus de citron est un 100 % jus de citron, naturel, ou concentré et reconstitué, dans lequel 100 % jus de citron désigne un jus de citron pouvant être obtenu en écrasant un citron et en préparant un jus pressé ou filtré, avec retrait de l'écorce et des pépins, ou un jus de citron pouvant être obtenu en diluant une forme concentrée du jus de citron afin de le rétablir en la forme de jus pressé.

2. Jus de citron selon la revendication 1, dans lequel un diamètre à 10 % des solides insolubles dans l'eau est entre 3,6 μm et 300 μm, inclus.

3. Aliment ou boisson contenant un jus de citron incluant le jus de citron selon la revendication 1 ou 2.

4. Procédé d'augmentation de la dispersibilité de solides insolubles dans l'eau dans un jus de citron, qui inclut la limitation du diamètre médian des solides insolubles dans l'eau entre 25 μm et 180 μm, inclus,

dans lequel le diamètre particulaire moyen des solides insolubles dans l'eau est entre 21 μm et 140 μm, inclus, et dans lequel le jus de citron est un 100 % jus de citron, naturel, ou concentré et reconstitué, dans lequel 100 % jus de citron désigne un jus de citron pouvant être obtenu en écrasant un citron et en préparant un jus pressé ou filtré, avec retrait de l'écorce et des pépins, ou un jus de citron pouvant être obtenu en diluant une forme concentrée du jus de citron afin de le rétablir en la forme de jus pressé.

# *Fig.1*

(A)

(B)

# Fig.2

Liquid level

Border line

Bulk height (%) = (B/A) × 100

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2005067740 A
- JP 2002300866 A
- US 2012088015 A1
- US 2004208966 A1

**Non-patent literature cited in the description**

- Current Juice/Fruit Beverage Handbook. Japan Fruit Juice Association, 01 October 1997, 574